# EUROPEAN PATENT APPLICATION

(11) **EP 1 746 140 A1**
(43) Date of publication of application: **24.01.2007**
(21) Application number: 06253834.3
(22) Date of filing: 21.07.2006
(51) Int. Cl.: C09J 133/08, C09J 133/10, C09J 7/02

(54) **Adhesive composition, double-coated adhesive sheet, adhesion method and portable electronic devices**

(30) Priority: 21.07.2005 JP 2005211731; 28.04.2006 JP 2006126553
(71) Applicant: NITTO DENKO CORPORATION, Ibaraki-shi, Osaka 567-8680 (JP)
(72) Inventor: Tosaki, Yutaka, Ibaraki-shi Osaka 567-8680 (JP); Hiramatsu, Tsuyoshi, Ibaraki-shi Osaka 567-8680 (JP); Yokohama, Junji, Ibaraki-shi Osaka 567-8680 (JP); Soeda, Yoshikazu, Ibaraki-shi Osaka 567-8680 (JP)
(74) Representative: Duckworth, Timothy John

(57) **Abstract**

The adhesive composition of the present invention has a gel fraction of 20-50%, which comprises an acrylic polymer obtained by polymerizing a monomer mixture comprising the following component (a) as a main component and the following component (b) in a proportion of 5-49 wt%:
component (a): an alkyl (meth)acrylate wherein the alkyl group has 4 to 12 carbon atoms,
component (b): a carboxyl group-containing monomer having a carboxyl group and an ethylenic unsaturated double bond, wherein component (b), when polymerized as a homopolymer has a glass transition temperature of not more than 70°C. The adhesive composition of the present invention is superior in all of the adhesion, impact resistance and repulsion resistance, and can adhere to a part having a coated film formed on a surface to be adhered.

## Description

### TECHNICAL FIELD OF THE INVENTION

The present invention relates to an adhesive composition, a double-coated adhesive sheet having an adhesive layer made of said adhesive composition on at least one side of a substrate, an adhesion method using said double-coated adhesive sheet, and a portable electronic device comprising a part adhered with said double-coated adhesive sheet.

### BACKGROUND OF THE INVENTION

Double-coated adhesive sheets have been used for fixing articles in various industrial fields, because the sheets can be punched out in any shape before adhesion to the articles, and show good workability. Particularly, since displays and nameplates of portable electronic devices such as PDA (Personal Digital Assistance), cellphone etc., and the like are small and have complicated shapes, double-coated adhesive sheets are often used for fixing these small parts.

Portable electronic devices could be sometimes dropped from a table and the like depending on the manner of use. There is a demand on the durability in such a case, which prevents falling off of small parts constituting portable electronic devices. However, small parts fixed with a conventional double-coated adhesive sheet have a risk of falling off when the portable electronic device is dropped, and cannot be said to have sufficient durability. To improve such durability, the adhesion area of a double-coated adhesive sheet may be enlarged. However, a large adhesion area is difficult to ensure due to the restriction on the design and function of the portable electronic device.

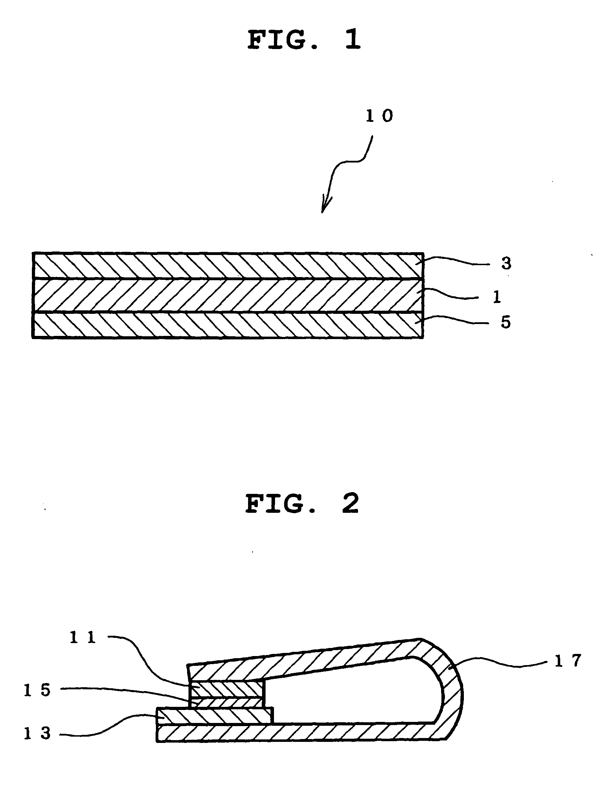

In the production of portable electronic devices, moreover, two small parts 11, 13 fixed to each other with a double-coated adhesive sheet 15 are sometimes adhered to à curved substrate for a flexible printed circuit (FPC) 17, as shown in Fig. 2. In this case, it sometimes happens that a stress is applied to the two small parts 11, 13 due to the repulsive force of the curved FPC 17 and, as a result, the double-coated adhesive sheet 15 is inconveniently delaminated.

In recent years, moreover, there is a tendency that the outer surface of portable electronic devices are coated with a water repellent or oil repellent paint and the like for a design or imparting antifouling property. When a coated film is formed on the surface to be adhered, conventional double-coated adhesive sheets do not adhere easily. Thus, a double-coated adhesive sheet capable of adhering to a surface to be adhered, which has such a coated film formed thereon, has been desired.

To solve such problems, the following suggestion has been made. For example, JP-A-2002-188061 proposes a double-coated adhesive sheet having, on at least one side of a substrate, an adhesive layer showing the local maximum in the loss tangent in the frequency band not less than the maximum natural frequency produced when electronic devices are dropped, wherein the local maximum value is not less than a given value. In addition, JP-A-2003-313515 discloses a double-coated adhesive sheet having, on at least one side of a substrate, a silicone adhesive layer having a temperature within a given range, at which the local maximum in the loss tangent is obtained by a dynamic viscoelasticity measurement. Moreover, JP-A-2003-313516 proposes a double-coated adhesive sheet having, on at least one surface, a silicone adhesive layer having a storage elastic modulus at 0°C within a given range. Furthermore, JP-A-2004-59853 discloses a double-coated adhesive sheet having, on at least one surface of a substrate, multiple adhesive layers showing the peak loss tangent at different temperatures, wherein the adhesive layer constituting the outermost layer shows a loss tangent at a temperature higher than that of other adhesive layer. In JP-A-02-120381 discloses a water-soluble or water-dispersible pressure-sensitive adhesive composition obtained by homo-polymerizing or co-polymerizing 50-100 wt% of a caprolactone adduct of acrylic acid and 50-0 wt% of a monomer copolymerizable therewith, namely, an adhesive composition always capable of pressure-sensitive adhesion and capable of dissolving or dispersing in water. In JP-A-02-235976, moreover, a dry cleaning identification tag having a defined peeling adhesive force and a defined soluble content, which are achieved by a particular formulation, which comprises a pressure-sensitive adhesive layer containing, as a main component, a copolymer obtained by polymerizing not less than 50 wt% of a caprolactone adduct of acrylic acid and not more than 50 wt% of other vinyl monomer copolymerizable therewith, is disclosed.

### DISCLOSURE OF THE INVENTION

However, in the double-coated adhesive sheets of JP-A-2002-188061, JP-A-2003-313515, JP-A-2003-313516 and JP-A-2004-59853, while the impact resistance at the time when the portable electronic device is dropped is improved, adhesion to and the aforementioned repellency of a portable electronic device having a coated film formed on the surface to be adhered has not been considered sufficiently and the sheets have a room for further improvement. In the case of the pressure-sensitive adhesives of JP-A-02-120381 and JP-A-02-235976, addition of not less than 50 wt% of the caprolactone adduct of acrylic acid increases the viscosity, which in turn gives a rough surface on coating in some cases to cause degradation of adhesive performance. As the situation stands, a double-coated adhesive sheet satisfying all of adhesion, impact resistance and repulsion resistance has not been provided.

The present invention has been made in view of such situation and aims at providing an adhesive composition superior in all of adhesion, impact resistance and repulsion resistance, which can be adhered even to a part having a coated film formed on a surface to be adhered. Another object of the present invention is to provide a double-coated adhesive sheet having an adhesive layer made of said adhesive composition on at least one side of a substrate, an adhesion method using said double-coated adhesive sheet, and a portable electronic device comprising a part adhered with said double-coated adhesive sheet.

The present inventors have conducted intensive studies in an attempt to solve the above-mentioned problems and found that the above-mentioned problems can be solved by an adhesive composition comprising, as an essential component, an acrylic polymer obtained by polymerizing a particular monomer mixture, and having a gel fraction within a particular range, which resulted in the completion of the present invention.

Accordingly, the present invention provides the following.
(1) An adhesive composition having a gel fraction of 20-50%, which comprises an acrylic polymer obtained by polymerizing a monomer mixture containing the following component (a) as a main component and the following component (b) in a proportion of 5-49 wt%:
   component (a): an alkyl (meth)acrylate wherein the alkyl group has 4 to 12 carbon atoms,
   component (b): a carboxyl group-containing monomer having a carboxyl group and an ethylenic unsaturated double bond, which affords, when polymerized, a homopolymer having a glass transition temperature of not more than 70°C.
(2) The adhesive composition of the above-mentioned (1), which further comprises a tackifier.
(3) The adhesive composition of the above-mentioned (2), wherein the content of the tackifier is 15-50 wt% relative to the weight of the acrylic polymer.
(4) A double-coated adhesive sheet comprising a substrate, a first adhesive layer formed on one surface of the substrate and a second adhesive layer formed on the other surface of the substrate, wherein at least the first adhesive layer is made of the adhesive composition of any one of the above-mentioned (1) to (3).
(5) The double-coated adhesive sheet of the above-mentioned (4), which is used for adhering part(s) of a portable electronic device.
(6) A method for adhering a first part having a coated film formed on the surface to be adhered to a second part, which comprises adhering the first adhesive layer of the double-coated adhesive sheet of the above-mentioned (4) or (5) to the surface to be adhered of the first part, and adhering the second adhesive layer of the sheet to the second part.
(7) A portable electronic device comprising a part adhered by the method of the above-mentioned (6).
(8) A portable electronic device comprising a first part having a coated film formed on the surface to be adhered and a second part, wherein the two parts are adhered to each other with the double-coated adhesive sheet of the above-mentioned (4) or (5) .

### BRIEF DESCRIPTION OF THE DRAWINGS

Fig. 1 is a sectional view showing one embodiment of the double-coated adhesive sheet of the present invention.
Fig. 2 is a sectional view explaining the mode of use of the double-coated adhesive sheet.
Fig. 3 shows an evaluation method of a repulsion resistance test.

In the Figures, each symbol shows the following. 1 substrate, 3 first adhesive layer, 5 second adhesive layer, 10 double-coated adhesive sheet, 11 small part, 13 small part, 15 double-coated adhesive sheet, 17 flexible printed circuit (FPC), 21 aluminum piece, 23 polyethylene terephthalate film, 25 hard coating surface, 27 acrylic board, d distance.

### EFFECT OF THE INVENTION

According to the present invention, an adhesive composition showing a superior adhesive performance even to a part having a coated film made of a water repellent or oil repellent paint and the like formed on the surface to be adhered, to which conventional adhesive sheets are difficult to be adhered, and showing superior impact resistance and superior repulsion resistance, can be provided. In addition, the double-coated adhesive sheet of the present invention is particularly useful for fixing a small part having a complicated shape (e.g., display, nameplate etc.) of portable electronic devices (e.g., PDA, cellphone etc.) and the like.

### Best Mode for Embodying the Invention

In the present invention, the double-coated adhesive sheet encompasses a tape.

The present invention is explained in detail in the following by referring to a preferable embodiment. In the explanation of the Figures, same elements are given same symbols and duplicated explanations are omitted. For convenient illustration, the size ratios in the Figures do not necessarily match those in the explanation.

The adhesive composition of the present invention is explained first.

The adhesive composition of the present invention comprises an acrylic polymer obtained by polymerizing a monomer mixture containing the following component (a) as a main component and the following component (b) in a proportion of 5-49 wt%, and has a gel fraction of 20-50%.

Firstly, the constituent elements of the acrylic polymer are explained.

As the alkyl (meth)acrylate wherein the alkyl group has 4 to 12 carbon atoms, which is component (a), for example, n-butyl (meth)acrylate, isobutyl (meth)acrylate, sec-butyl (meth)acrylate, t-butyl (meth)acrylate, pentyl (meth)acrylate, isopentyl (meth)acrylate, neopentyl (meth)acrylate, hexyl (meth) acrylate, heptyl (meth) acrylate, octyl (meth) acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate and the like can be mentioned. The alkyl group constituting the alkyl ester may be linear or branched. Of these, an alkyl (meth)acrylate wherein the alkyl group has 4 to 9 carbon atoms is preferable, and n-butyl acrylate, 2-ethylhexyl acrylate, isooctyl acrylate and isononyl acrylate are more preferable. Component (a) can be used alone or in combination of two and more kinds thereof.

In the present invention, component (a) is a monomer component as a main component, and the content of component (a) is generally 51-95 wt%, preferably 55-95 wt%, more preferably 60-90 wt%, of the weight of monomer mixture. When the above-mentioned content is less than 51 wt%, the obtained adhesive composition fails to achieve the adhesive force and cohesive force necessary for application to an adhesive sheet. When it is more than 95 wt%, the content of the carboxyl group-containing monomer becomes smaller, which makes the crosslinking by the functional group insufficient. As a result, the adhesive force becomes insufficient.

Component (b) is a carboxyl group-containing monomer having a carboxyl group and an ethylenic unsaturated double bond, and affording, when polymerized, a homopolymer having a glass transition temperature of not more than 70°C (preferably not more than 60°C, more preferably not more than 50°C). When the Tg is higher than 70°C, the obtained acrylic polymer comes to have too high a cohesive force. Thus, when the obtained adhesive composition is applied to an adhesive sheet, it shows inferior impact resistance.

As used herein, the "glass transition temperature" means a value obtained by the following measurement method. To be specific, a carboxyl group-containing monomer (100 parts by weight), 2,2'-azobis(isobutyronitrile) (0.2 part by weight) and, as a polymerization solvent, ethyl acetate (200 parts by weight) are placed in a reactor equipped with a thermometer, a stirrer, a nitrogen inlet tube and a refluxing cooling tube, and the mixture is stirred while introducing a nitrogen gas for 1 hr. After removing oxygen in the polymerization system in this manner, the mixture is raised to 63°C and reacted for 10 hr. Then, the mixture is allowed to cool to room temperature to give a carboxyl group-containing homopolymer solution having a solid content of 33 wt%. This polymer solution is cast on a release liner and dried to give a test sample (homopolymer sheet) having a thickness of about 2 mm. This test sample is punched into a disc having a diameter of 7.9 mm and sandwiched between parallel plates, viscoelasticity is measured in a shear mode using a viscoelasticity tester (ARES, manufactured by Rheometric Science, Inc.) while applying a shear strain of frequency 1Hz at a temperature range of -70°C to 150°C and temperature rise rate of 5°C/min, and the peak top temperature of tanδ is taken as the glass transition temperature.

As component (b), for example, ω-carboxy-polycaprolactone mono(meth)acrylate, phthalic acid mono ester with hydroxymethyl (meth)acrylate, phthalic acid mono ester with hydroxyethyl (meth)acrylate, phthalic acid mono ester with hydroxypropyl (meth)acrylate, phthalic acid mono ester with hydroxybutyl (meth)acrylate, phthalic acid mono ester with hydroxypentyl (meth)acrylate, phthalic acid mono ester with hydroxyhexyl (meth)acrylate, phthalic acid mono ester with hydroxyheptyl (meth)acrylate, phthalic acid mono ester with hydroxyoctyl (meth)acrylate, phthalic acid mono ester with hydroxy-2-ethylhexyl (meth)acrylate, phthalic acid mono ester with hydroxynonyl (meth)acrylate, phthalic acid mono ester with hydroxydecyl (meth)acrylate, phthalic acid mono ester with hydroxyundecyl (meth)acrylate, phthalic acid mono ester with hydroxydodecyl (meth)acrylate, succinic acid mono ester with hydroxymethyl (meth)acrylate, succinic acid mono ester with hydroxyethyl (meth)acrylate, succinic acid mono ester with hydroxypropyl (meth)acrylate, succinic acid mono ester with hydroxybutyl (meth)acrylate, succinic acid mono ester with hydroxypentyl (meth)acrylate, succinic acid mono ester with hydroxyhexyl (meth)acrylate, succinic acid mono ester with hydroxyheptyl (meth)acrylate, succinic acid mono ester with hydroxyoctyl (meth)acrylate, succinic acid mono ester with hydroxyl-2-ethylhexyl (meth)acrylate, succinic acid mono ester with hydroxynonyl (meth)acrylate, succinic acid mono ester with hydroxydecyl (meth)acrylate, succinic acid mono ester with hydroxyundecyl (meth)acrylate, succinic acid mono ester with hydroxydodecyl (meth)acrylate, acrylic acid dimer, acrylic acid trimer, hexahydrophthalic acid mono ester with hydroxymethyl (meth)acrylate, hexahydrophthalic acid mono ester with hydroxyethyl (meth)acrylate, hexahydrophthalic acid mono ester with hydroxypropyl (meth)acrylate, hexahydrophthalic acid mono ester with hydroxybutyl (meth)acrylate, hexahydrophthalic acid mono ester with hydroxypentyl (meth)acrylate, hexahydrophthalic acid mono ester with hydroxyhexyl (meth)acrylate, hexahydrophthalic acid mono ester with hydroxyheptyl (meth)acrylate, hexahydrophthalic acid mono ester with hydroxyoctyl (meth)acrylate, hexahydrophthalic acid mono ester with hydroxyl-2-ethylhexyl (meth)acrylate, hexahydrophthalic acid mono ester with hydroxynonyl (meth)acrylate, hexahydrophthalic acid hydroxydecyl (meth)acrylate, hexahydrophthalic acid mono ester with hydroxyundecyl (meth)acrylate, hexahydrophthalic acid mono ester with hydroxydodecyl (meth)acrylate can be mentioned. These can be used alone or in a combination of two or more kinds thereof. Of these, ω-carboxy-polycaprolactone monoacrylate, acrylic acid dimer, succinic acid mono ester with hydroxyethyl acrylate, and hexahydroxyphthalic acid mono ester with hydroxyethyl acrylate are preferable. The acrylic acid dimmer is commercially available as, for example, ARONIX M-5600 (product name, manufactured by Toagosei Co., Ltd.), and its homopolymer has a Tg of 45°C. In addition, succinic acid mono ester with hydroxyethyl acrylate is commercially available as, for example, ARONIX M-5500 (product name, manufactured by Toagosei Co., Ltd.), Light Acrylate HOA-MS (product name, manufactured by KYOEISHA CHEMICAL Co., LTD.), and its homopolymer has a Tg of -40°C.

The content of component (b) is 5-49 wt%, preferably 5-45 wt%, more preferably 10-40 wt%, of the weight of monomer mixture. When the above-mentioned content is less than 5 wt%, the function as a crosslinking point cannot be sufficiently achieved in the obtained polymer, due to which the necessary cohesive force cannot be obtained easily when the obtained adhesive composition is applied to an adhesive sheet. On the other hand, when it is greater than 49 wt%, the viscosity of the obtained polymer increases. Thus, the formation of the adhesive layer of the adhesive sheet using the obtained adhesive composition becomes difficult.

As a monomer component constituting the acrylic polymer, a copolymerizable monomer with component (a) and component (b) can be used as necessary. The content of the copolymerizable monomer can be appropriately selected depending on the kind of the monomer and the like as long as it is less than 45 wt% of the weight of monomer mixture. For expression of good pressure-sensitive adhesion, the content is desirably determined such that the obtained acrylic polymer has a glass transition temperature of generally not more than -30°C.

As the copolymerizable monomer, for example, alkyl (meth)acrylates wherein the alkyl group has 1 to 3 carbons, such as methyl (meth)acrylate, ethyl (meth)acrylate, n-propyl (meth)acrylate, isopropyl (meth)acrylate and the like; alkyl (meth)acrylates wherein the alkyl group has 13 to 18 carbons, such as tridecyl methacrylate, stearyl (meth)acrylate and the like; functional monomers such as hydroxyalkyl (meth)acrylate, glycerol dimethacrylate, glycidyl (meth)acrylate , 2-methacryloyloxyethylisocyanate, (meth)acrylic acid, itaconic acid, maleic anhydride, crotonic acid, maleic acid, fumaric acid and the like can be mentioned. In addition, multifunctional monomers such as triethylene glycol diacrylate, ethylene glycol dimethacrylate, trimethylolpropane tri(meth)acrylate and the like; vinyl acetate, styrene, cyclohexyl (meth)acrylate, (meth)acrylonitrile, n-vinylpyrrolidone, (meth)acryloylmorpholine, cyclohexylmaleimide, isopropylmaleimide, (meth)acrylamide and the like can be mentioned. These can be used alone or in combination of two or more kinds thereof. Of these, methyl methacrylate, ethyl acrylate, 2-hydroxyethyl acrylate, vinyl acetate, n-vinylpyrrolidone, acryloylmorpholine, cyclohexylmaleimide and acrylamide are preferable.

The polymerization method of the above-mentioned monomer mixture is not particularly limited and, for example, a solution polymerization method, a suspension polymerization method, an emulsion polymerization method, a UV polymerization method and the like can be applied. Particularly, the solution polymerization method is preferable in terms of cost, because invasion of water into small parts can be prevented during adhesion of an adhesive sheet, since water is not used during polymerization and the like.

As the initiator to be used for the polymerization reaction, for example, oil-soluble initiators such as an azo compound (e.g. 2,2'-azobis(isobutyronitrile), 2,2'-azobis(4-methoxy-2,4-dimethylvaleronitrile), 2,2'-azobis(2,4-dimethylvaleronitrile), 2,2'-azobis(2-methylbutylnitrile), 1,1'-azobis(cyclohexane-1-carbonitrile), 2,2'-azobis(2,4,4-trimethylpentane), dimethyl-2,2'-azobis(2-methylpropionate) etc.), a peroxide (e.g. benzoylperoxide, di-t-butylhydroperoxide, di-t-butylperoxide, t-butyl peroxybenzoate, dicumylperoxide, 1,1-bis(t-butylperoxy)-3,3,5-trimethylcyclohexane, 1,1-bis(t-butylperoxy)cyclododecane etc.), and the like can be mentioned. These can be used alone or in combination of two or more kinds thereof. The amount of the initiator to be used can be an amount generally used for the above-mentioned polymerization reaction and is, for example, 0.01 - 1 part by weight per 100 parts by weight of the monomer mixture.

In addition, a chain transfer agent can be used during polymerization so that the obtained acrylic polymer will have an appropriate molecular weight. As the chain transfer agent, conventional chain transfer agents such as lauryl mercaptane, glycidyl mercaptane, 2-mercaptoethanol, mercaptoacetic acid, 2-ethylhexyl thioglycolate, 2,3-dimercapto-1-propanol, α-methylstyrene dimer and the like can be used. These can be used alone or in combination of two or more kinds thereof. The amount of the chain transfer agent to be used may be any as long as it is generally used for the above-mentioned polymerization reaction and is, for example, about 0.01 - 15 parts by weight per 100 parts by weight of the monomer mixture.

The weight average molecular weight (Mw) of the acrylic polymer is preferably 400,000 - 3,000,000, more preferably 500,000 - 1,500,000. When it is less than 400,000, high repulsion resistance cannot be obtained easily due to stringiness and the like. When it exceeds 3,000,000, a good adhesive force cannot be obtained easily. Mw means a weight average molecular weight based on the polystyrene by GPC.

The solvent to be used for the above-mentioned polymerization reaction may be those generally used for polymerization reaction. For example, ethyl acetate, toluene, n-butyl acetate, n-hexane, cyclohexane, methyl ethyl ketone, methyl isobutyl ketone and the like can be mentioned. These can be used alone or in a combination of two or more kinds thereof. The amount of the solvent to be used may be any generally used for the above-mentioned polymerization reaction and is, for example, about 50-600 parts by weight per 100 parts by weight of the monomer mixture.

The adhesive composition desirably contains a tackifier. As a result, the adhesive performance and repulsion resistance can be enhanced more. The amount of the tackifier to be used is generally 15-50 wt%, preferably 15-45 wt%, more preferably 20-40 wt%, relative to the weight of the acrylic polymer. When the amount of the tackifier is less than 15 wt%, a sufficient adhesive force to the surface having a coated film formed thereon is difficult to obtain and the repulsion resistance and impact resistance tend to be inferior. When it is higher than 50 wt%, the glass transition temperature of the adhesive layer becomes too high and the impact resistance tends to become inferior.

The tackifier is not particularly limited, and conventional known ones can be used. To be specific, rosin ester resin, hydrogenated rosin resin, terpene resin, coumarone-inden resin, alicyclic saturated hydrocarbon resin, C5 petroleum resin, C9 petroleum resin, C5-C9 copolymerized petroleum resin and the like can be mentioned. These can be used alone or in a combination of two or more kinds thereof. These tackifier may be dissolved in a conventional solvent such as toluene, ethyl acetate and the like, and added to an acrylic polymer solution.

The adhesive composition of the present invention has a gel fraction of 20-50% after drying or curing. While the method for raising the gel fraction is not particularly limited, for example, a method comprising adding a crosslinking agent to the above-mentioned acrylic polymer can be mentioned. The crosslinking agent is not particularly limited, and conventional known ones can be used. For example, multifunctional melamine compounds such as methylated methylolmelamine, butylated hexamethylolmelamine and the like; multifunctional epoxy compounds such as diglycidyl aniline, glycerol diglycidyl ether and the like; multifunctional isocyanate compounds such as tolylene diisocyanate, hexamethylene diisocyanate, polymethylene polyphenyl isocyanate, diphenylmethane diisocyanate, tolylene diisocyanate adducts of trimethylolpropane, polyether polyisocyanate, polyester polyisocyanate and the like, and the like can be mentioned. These can be used alone or in a combination of two or more kinds thereof. The amount of the crosslinking agent to be used is appropriately determined depending on the kinds of the acrylic polymer and crosslinking agent. It is generally 0.001 - 20 parts by weight, preferably 0.001 - 10 parts by weight, more preferably 0.01 - 5 parts by weight, per 100 parts by weight of the acrylic polymer.

The adhesive composition may contain, besides the crosslinking agent, conventional additives such as UV absorber, light stabilizer, peel adjusting agent, plasticizer, softening agent, filler, coloring agent (pigment, dye etc.), age resister, surfactant and the like.

As used herein, the gel fraction is a value calculated by the following "measurement method of gel fraction".

### (Measurement method of gel fraction)

An adhesive composition is applied to a release liner, and dried or cured to give an adhesive layer. The adhesive layer (about 0.1 g) is wrapped with a 0.2 µm thick tetrafluoroethylene sheet (product name "NTF1122", manufactured by Nitto Denko Corporation), and bound with a kite string, and the weight thereof is measured and taken as the weight before immersion. The weight before immersion is a total weight of the adhesive layer, tetrafluoroethylene sheet and the kite string. In addition, the weights of the tetrafluoroethylene sheet and the kite string to be used are measured and taken as the package weight.

Then, the adhesive layer which is wrapped with a tetrafluoroethylene sheet and bound with a kite string, is placed in a 50 ml container filled with ethyl acetate, and stood at room temperature for one week. Then, the adhesive layer is taken out from the container and dried in a dryer at 130°C for 2 hr to evaporate ethyl acetate. The sample weight is measured and taken as the weight after immersion.

The gel fraction is calculated from the following formula.

Gel fraction (wt%) = (A-B)/(C-B)×100 (1) In the formula (1), A is the weight after immersion, B is a package weight, and C is the weight before immersion.

In the present invention, the gel fraction calculated in this way needs to be 20-50%, preferably 25-50%, more preferably 30-48%. When the gel fraction is lower than 20%, the objective cohesive force cannot be obtained easily, which in turn degrades repulsion resistance. When it is higher than 50%, although sufficient cohesive force can be obtained, an adhesive force becomes lower, and the repulsion resistance and impact resistance unpreferably become insufficient.

The preparation method of the adhesive composition is not particularly limited, for example, a monomer mixture comprising the above-mentioned component (a), component (b) and, as necessary, a copolymerizable monomer are polymerized according to the above-mentioned polymerization method to give the acrylic polymer solution. The obtained acrylic polymer solution may be used as it is as an adhesive composition, or the above-mentioned various additives may be added as necessary. In addition, the acrylic polymer after polymerization reaction may be isolated and purified, and the obtained acrylic polymer is dissolved or suspended in a solvent to give an adhesive composition, to which the above-mentioned various additives may be added as necessary, or the above-mentioned various additives may be mixed with the isolated and purified acrylic polymer as necessary to give an adhesive composition. When the acrylic polymer is to be isolated and purified, the isolation and purification method is not particularly limited and a method conventionally used in the field of polymer synthesis can be used.

The adhesive composition of the present invention is useful for adhesion in various fields. For example, it is useful as an adhesive composition for formation of an adhesive layer of an adhesive sheet, particularly, a double-coated adhesive sheet.

Next, a double-coated adhesive sheet is explained.

Fig. 1 is a sectional view showing one embodiment of the double-coated adhesive sheet of the present invention. A double-coated adhesive sheet 10 comprises a substrate 1, a first adhesive layer 3 formed on one surface of the substrate 1, and a second adhesive layer 5 formed on the other surface of the substrate 1. The first adhesive layer 3 itself has pressure-sensitive adhesion property, and is characteristically made of the aforementioned adhesive composition of the present invention.

As the adhesive constituting the second adhesive layer 5, various adhesives can be used depending on the adherend. The adhesive is not particularly limited and, for example, an acrylic adhesive, a rubber adhesive and the like can be mentioned. Of these, an acrylic adhesive is preferable in terms of cost, durability, adhesive performance and the like. The second adhesive layer 5 may be made of the adhesive composition of the present invention, as in the case of the first adhesive layer 3.

The substrate 1 is not particularly limited as long as it is generally used in the field of adhesive sheet and, for example, synthesis resin films made of polyethylene, polypropylene, polyethylene terephthalate and the like; rubber sheet, paper, cloth, non-woven fabric, foamed sheet, metal foil, a laminate thereof and the like can be mentioned. Of these, a synthetic resin film and a non-woven fabric are preferably used, in view of the strength, processing property, size stability and the like. While the thickness of the substrate is not particularly limited, it is generally about 5 - 500 µm.

The method for forming the adhesive layer 3 is not particularly limited, and a method generally used for the production of adhesive sheets can be used. For example, a method comprising dissolving an adhesive composition in a solvent where necessary, such as toluene and the like, applying the solution to a release liner, drying to form an adhesive layer 3, and transferring the adhesive layer 3 onto a substrate 1, and a method comprising applying the above-mentioned solution of the adhesive composition to a substrate 1, and drying to form an adhesive layer 3 can be mentioned. While the thickness of the adhesive layer 3 is not particularly limited, it is preferably 3 - 100 µm, more preferably 5 - 90 µm, still more preferably 10 - 80 µm. When the thickness of the adhesive layer is smaller than 3 µm, a sufficient adhesive force is difficult to achieve, and when it is larger than 100 µm, protrusion of adhesive, punching failure and the like easily occur when punching out the adhesive sheet into a desired shape for fixing small parts, which tends to cause inferior processing. For forming the second adhesive layer 5, a method similar to the aforementioned method can be employed. While the thickness of the second adhesive layer 5 is not particularly limited, for example, it is desirably about 3 - 100 µm from the same viewpoints as in the first adhesive layer 3.

As the release liner, those made of the materials exemplified for the above-mentioned substrate 1 and the like can be mentioned. The surface of the release liner may be subjected to a release treatment such as a silicone-treatment, a long chain alkyl-treatment, a fluorine-treatment and the like as necessary to enhance the release property from the adhesive layer.

The double-coated adhesive sheet 10 can afford the following effects conducive to the first adhesive layer 3 made of the aforementioned adhesive composition of the present invention. That is, since the adhesive composition comprises, as an essential component, an acrylic polymer obtained by polymerizing a particular monomer mixture, the adhesive sheet becomes superior in both the adhesion and impact resistance (flexibility). As a result, the adhesive sheet can express superior adhesion even to an article having a coated film made of a water repellent or oil repellent paint and the like formed on the surface to be adhered, and can prevent breakage due to dropping from a table and the like. Moreover, repulsion resistance becomes superior mainly due to the gel fraction of an adhesive composition, which is within a particular range. Thus, inconveniences such as delamination and the like are suppressed even when the stress due to a deformed substrate acts on the adhesive layer. Therefore, the double-coated adhesive sheet 10 is useful for fixing articles etc., and the like in various fields and, for example, can be preferably used for fixing a plastic part to a part having a hard coat-treated surface to be adhered in a portable electronic device and the like. As used herein, the portable electronic device means an electric instrument that can be carried, such as cellphone, PDA and the like.

Now, the adhesion method of the present invention is explained below.

The adhesion method of the present invention comprises adhering, with a double-coated adhesive sheet, two parts to each other, which have a coated film formed on at least one of two surfaces to be adhered, for example, a first part having a coated film made of a paint and the like formed on the surface to be adhered and a second part. The first adhesive layer of the aforementioned double-coated adhesive sheet of the present invention is adhered to the surface to be adhered of the first part, and the second adhesive layer is adhered to the surface to be adhered of the second part. As a result, the first part and the second part are fixed via the double-coated adhesive sheet. While the double-coated adhesive sheet has the aforementioned constitution, when the second part has a coated film formed on the surface to be adhered, the second adhesive layer desirably also is made of the adhesive composition of the present invention.

As used herein, the coated film is, for example, made of various resins such as silicone resin, polyester resin, acrylic resin, urethane resin, amide resin, epoxy resin and the like. The two parts may be made of, for example, any material selected from organic materials such as polycarbonate, acrylic resin, polyester, polyurethane and the like; and inorganic materials such as glass, metal and the like.

The adhesion method of the present invention can afford sufficient properties in adhesion, impact resistance and repulsion resistance due to the use of the double-coated adhesive sheet of the present invention for fixing articles, and can express a superior adhesive performance even when articles have a coated film made of a resin such as silicone and the like formed on the surface to be adhered.

### Examples

The present invention is explained in detail in the following by referring to Examples, which are not to be construed as limitative. In the following, "parts" means "parts by weight" unless otherwise specified.

### (Preparation of acrylic polymer A)

2-Ethylhexyl acrylate (85 parts), ω-carboxy-polycaprolactone monoacrylate (15 parts, its homopolymer having a Tg of -40°C), 2,2'-azobis(isobutyronitrile) (0.2 part) and ethyl acetate (100 parts) as a polymerization solvent were charged into a reactor equipped with a thermometer, a stirrer, a nitrogen inlet tube and a refluxing cooling tube, and the mixture was stirred for 1 hr while introducing a nitrogen gas. In this way, oxygen in the polymerization system was removed, and the mixture was warmed to 63°C and allowed to react for 10 hr. Then, the mixture was allowed to cool to room temperature, and ethyl acetate (135 parts) was added to give an acrylic polymer A solution having a solid content of 30 wt%. The weight average molecular weight of the obtained acrylic polymer A was 900,000.

### (Preparation of acrylic polymer B)

2-Ethylhexyl acrylate (55 parts), ω-carboxy-polycaprolactone monoacrylate (45 parts, its homopolymer having a Tg of -40°C), 2,2'-azobis(isobutyronitrile) (0.2 part) and ethyl acetate (100 parts) as a polymerization solvent were charged into a reactor equipped with a thermometer, a stirrer, a nitrogen inlet tube and a refluxing cooling tube, and the mixture was stirred for 1 hr while introducing a nitrogen gas. In this way, oxygen in the polymerization system was removed, and the mixture was warmed to 63°C, and allowed to react for 10 hr. Then, the mixture was allowed to cool to room temperature, and ethyl acetate (135 parts) was added to give an acrylic polymer B solution having a solid content of 30 wt%. The weight average molecular weight of the obtained acrylic polymer B was 750,000.

### (Preparation of acrylic polymer C)

2-Ethylhexyl acrylate (50 parts), ω-carboxy-polycaprolactone monoacrylate (50 parts, its homopolymer having a Tg of -40°C), 2,2'-azobis(isobutyronitrile) (0.2 part) and ethyl acetate (100 parts) as a polymerization solvent were charged into a reactor equipped with a thermometer, a stirrer, a nitrogen inlet tube and a refluxing cooling tube, and the mixture was stirred for 1 hr while introducing a nitrogen gas. In this way, oxygen in the polymerization system was removed, and the mixture was warmed to 63°C and allowed to react for 10 hr. Then, the mixture was allowed to cool to room temperature, and ethyl acetate (135 parts) was added to give an acrylic polymer C solution having a solid content of 30 wt%. The weight average molecular weight of the obtained acrylic polymer C was 700,000.

### (Example 1)

An adhesive composition was prepared by adding a tetrafunctional epoxy crosslinking agent (0.02 part, product name: TETRAD C, manufactured by MITSUBISHI GAS CHEMICAL COMPANY, INC.) and a polymerized rosin ester (40 parts, product name: PENSEL D-135, manufactured by Arakawa Chemical Industries, Ltd.) to the acrylic polymer A solution (100 parts, based on the solid content). The adhesive composition was cast on a polyethylene terephthalate film having a release-treated surface (release liner: thickness 38 µm) such that the thickness after drying became 35 µm, and dried by heating at 100°C for 3 min to form an adhesive layer. Two sheets of the film were prepared, adhered to a polyethylene terephthalate film (substrate: thickness 12 µm) from the both sides, aged at 50°C for 48 hr to give a double-coated adhesive sheet. The adhesive composition had a gel fraction of 36%.

### (Example 2)

In the same manner as in Example 1 except that a tetrafunctional epoxy crosslinking agent (0.02 part, product name: TETRAD C) and a polymerized rosin ester (20 parts, product name: PENSEL D-135) were added to the acrylic polymer A solution (100 parts, based on the solid content) to give an adhesive composition, a double-coated adhesive sheet was prepared. The adhesive composition had a gel fraction of 43%.

### (Example 3)

In the same manner as in Example 1 except that a tetrafunctional epoxy crosslinking agent (0.02 part, product name: TETRAD C) and a polymerized rosin ester (20 parts, product name: PENSEL D-135) were added to the acrylic polymer B solution (100 parts, based on the solid content) to give an adhesive composition, a double-coated adhesive sheet was prepared. The adhesive composition had a gel fraction of 48%. (Comparative Example 1)

In the same manner as in Example 1 except that a tetrafunctional epoxy crosslinking agent (0.03 part, product name: TETRAD C) and a polymerized rosin ester (6 parts, product name: PENSEL D-135) were added to the acrylic polymer A solution (100 parts, based on the solid content) to give an adhesive composition, a double-coated adhesive sheet was prepared. The adhesive composition had a gel fraction of 61%.

### (Comparative Example 2)

In the same manner as in Example 1 except that a tetrafunctional epoxy crosslinking agent (0.0006 part, product name: TETRAD C) and a polymerized rosin ester (20 parts, product name: PENSEL D-135) were added to the acrylic polymer A solution (100 parts, based on the solid content) to give an adhesive composition, a double-coated adhesive sheet was prepared. The adhesive composition had a gel fraction of 1%. (Comparative Example 3)

An adhesive composition was prepared by adding a tetrafunctional epoxy crosslinking agent (0.015 part, product name: TETRAD C) and a polymerized rosin ester (20 parts, product name: PENSEL D-135) to the acrylic polymer C solution (100 parts, based on the solid content). The adhesive composition was cast on a polyethylene terephthalate film having a release-treated surface (release liner: thickness 38 µm) such that the thickness after drying became 35 µm, and dried by heating at 100°C for 3 min to form an adhesive layer. However, the surface of the adhesive layer was extremely rough and useless for the evaluation thereafter. The adhesive composition had a gel fraction of 42%.

The double-coated adhesive sheets prepared as mentioned above were subjected to an impact resistance test, a repulsion resistance test and an adhesive force test according to the methods shown below. The obtained results are shown in Table 1.

### <Impact resistance test>

The double-coated adhesive sheets were punched out into a frame shape (outer size 40 mm × 30 mm, width 2 mm). To polyethylene terephthalate (outer size 45 mm × 35 mm, thickness 50 µm) having a silicone hard coating on one surface was adhered, on the other surface thereof, a polycarbonate board having the same size (thickness 2 mm) to give an adherend 1. A metal board (outer size 90 mm × 70 mm, thickness 2 mm, weight 100 g) was adhered to one surface of a polycarbonate board (outer size 80 mm × 60 mm, thickness 2 mm) to give an adherend 2. The adherend 1 and adherend 2 were adhered to each other with the above-mentioned frame-shaped double-coated adhesive sheet, such that the silicone hard coating surface of adherend 1 and the polycarbonate board of adherend 2 face each other to give impact resistance test samples.

The above-mentioned samples were stood at 23°C for 24 hr, dropped onto the concrete from 1.5 m height at 23°C, and the number of dropping times up to the falling off of adherend 1 was measured. As a dropping method, the sample was dropped from a horizontal position so that the surface of the metal board of the sample would receive an impact. This produced severer conditions (smaller times of dropping up to the falling off of the polycarbonate board) than dropping of the sample from the perpendicular position (the force applied to the adhesive layer is in the shear direction).

### <Repulsion resistance test>

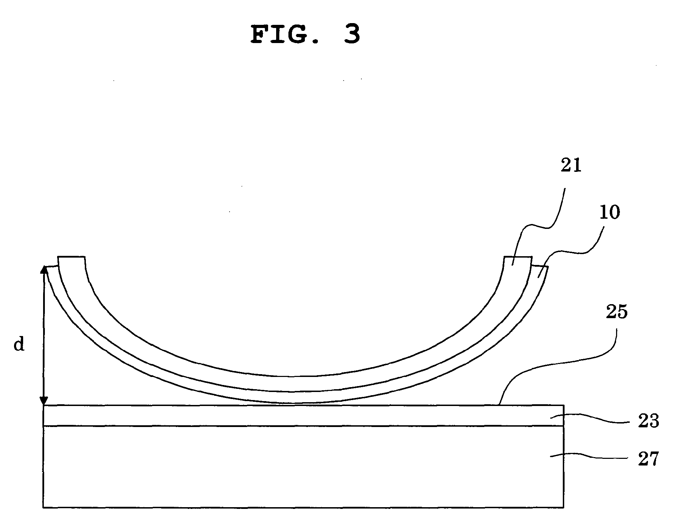

To an aluminum piece (outer size 10 mm × 90 mm, thickness 0.3 mm) was adhered a double-coated adhesive sheet having the same area by peeling off a release liner on one surface, the aluminum piece was wound around a cylindrical column having a diameter of 30 mm such that the aluminum surface came into contact with the cylindrical column, and the piece was pressed against the column for about 10 seconds to give a circular arc sample. Separately, a polyethylene terephthalate film having a silicone hard coating on one surface was adhered to an acrylic board (200 mm × 300 mm, thickness 2 mm) with a double-coated adhesive sheet, such that the PET film surface opposite to the silicone hard coating surface and the acrylic board face each other, to give a laminate. The release liner of the double-coated adhesive sheet adhered to the aluminum piece was peeled off, and the piece was adhered to the laminate with a laminator, such that the double-coated adhesive sheet and the silicone hard coating surface of the laminate face each other. The distances (d) from the laminate to the both ends of the aluminum piece after standing (23°C × 24 hr) were measured, as shown in Fig. 3, and the average value was determined.

### <Adhesive force test>

To one surface of a double-coated adhesive sheet (width 20 mm × length 120 mm) was adhered a 25 µm thick polyethylene terephthalate film having the same size to give a test piece. The test piece was adhered to a SUS 304 BA board by one reciprocation of a 19.6N roller according to JIS Z-0237 in an atmosphere of 23°C, 65% RH. After 30 min, 180° peeling adhesive force was measured in an atmosphere of 23°C, 65% RH using a TENSILON peel tester at a tensile rate of 300 mm/min.

**Table 1**

| | Ex. 1 | Ex. 2 | Ex. 3 | Comp. Ex. 1 | Comp. Ex. 2 | Comp. Ex. 3 |
|---|---|---|---|---|---|---|
| amount of tackifier (parts) | 40 | 20 | 20 | 6 | 20 | 20 |
| gel fraction (%) | 36 | 43 | 48 | 61 | 1 | 42 |
| impact resistance test (times) | 27 | 22 | 20 | 35 | 20 | evaluation not possible due to surface roughness |
| | ○ | ○ | ○ | ○ | ○ | |
| repulsion resistance test (mm) | 0.5 | 2 | 1.5 | 15 | 13 | |
| | ○ | ○ | ○ | × | × | |
| adhesive force (N/20 mm) SUS | 20 | 11 | 13 | 7 | 13 | |
| | ○ | ○ | ○ | Δ | ○ | |

As is clear from the results shown in Table 1, it was confirmed that the double-coated adhesive sheets of Examples 1-3 were highly balanced in all of the impact resistance, repulsion resistance and adhesion, as compared to the double-coated adhesive sheets of Comparative Examples 1-3 and were good double-coated adhesive sheets.

## Claims

1. An adhesive composition having a gel fraction of 20-50%, which comprises an acrylic polymer obtainable by polymerizing a monomer mixture comprising the following component (a) as a main component and the following component (b) in a proportion of 5-49 wt%:
component (a): an alkyl (meth)acrylate wherein the alkyl group has 4 to 12 carbon atoms,
component (b): a carboxyl group-containing monomer having a carboxyl group and an ethylenically unsaturated double bond, wherein component (b), when polymerized as a homopolymer, has a glass transition temperature of not more than 70°C.

2. An adhesive composition according to claim 1, wherein the acrylic polymer further comprises a copolymerizable monomer in a proportion of less than 45 wt%.

3. An adhesive composition according to claim 1 or claim 2, which further comprises a tackifier.

4. An adhesive composition according to any one of the preceding claims, wherein the content of the tackifier is 15-50 wt% relative to the weight of the acrylic polymer.

5. A double-coated adhesive sheet comprising a substrate, a first adhesive layer formed on one surface of the substrate and a second adhesive layer formed on the other surface of the substrate, wherein at least the first adhesive layer comprises an adhesive composition according to any one of claims 1 to 4.

6. Use of a double-coated adhesive sheet according to claim 5, for adhering part(s) of a portable electronic device.

7. Use according to claim 6, wherein the part(s) are further adhered to a curved substrate for a flexible printed circuit.

8. A method for adhering a first part, having a coated film formed on the surface to be adhered, to a second part, said method comprising adhering the first adhesive layer of a double-coated adhesive sheet according to claim 5 to the surface to be adhered of the first part, and adhering the second adhesive layer of the sheet to the second part.

9. A portable electronic device comprising a part adhered by a method according to claim 8.

10. A portable electronic device comprising a first part, having a coated film formed on the surface to be adhered, and a second part, wherein the two parts are adhered to each other with a double-coated adhesive sheet according to claim 5.
